# FASCICULE DE BREVET EUROPEEN

(11) **EP 1 770 398 B1**
(45) Date de publication et mention de la délivrance du brevet: **13.05.2009**
(21) Numéro de dépôt: 06291495.7
(22) Date de dépôt: 22.09.2006
(51) Int. Cl.: G01N 35/00, G01N 35/02, G01N 21/25, G01N 21/07, G01N 33/483

(54) **Analyseur compact de biochimie sèche pour l'analyse d'échantillons sanguins**
Kompakter Trockenbiochemie Analysator zur Analyse von Blutproben
Compact dry biochemical analyzer for the analysis of blood samples

(30) Priorité: 03.10.2005 FR 0510081
(43) Date de publication de la demande: 04.04.2007
(73) Titulaire: Melet, François, 2012 Auvernier (CH)
(72) Inventeur: Melet, François, 2012 Auvernier (CH)
(74) Mandataire: Quantin, Bruno Marie Henri

(56) Documents cités:
- US-A- 4 515 889
- US-A- 5 149 501
- US-A- 5 478 750
- SCHEMBRI C T ET AL: "CENTRIFUGATION AND CAPILLARITY INTEGRATED INTO A MULTIPLE ANALYTE WHOLE BLOOD ANALYSER" JOURNAL OF AUTOMATIC CHEMISTRY, TAYLOR & FRANCIS LTD, GB, vol. 17, no. 3, mai 1995 (1995-05), pages 99-104, XP008041627 ISSN: 0142-0453

## Description

L'invention concerne un analyseur compact de biochimie sèche pour l'analyse d'échantillons sanguins, notamment des échantillons de plasma.

### Etat de la technique

Deux principes s'affrontent aujourd'hui sur le marché de ces analyseurs :
- le principe du test par test mis en oeuvre notamment dans les appareils distribués par VETTEST sous la référence IDEXX, par J&J sous la référence VITROS DT60, par ARKRAY sous la référence SPOTCHEM ou par FUJI sous la référence FUJ13000, et
- le principe des bilans complets (typiquement de 4 à 16 paramètres, selon les cas) mis en oeuvre par des analyseurs à rotor tels que ceux distribués par ABAXIS sous la référence VETSCAN &PICCOLO ou par HEMAGEN sous la référence ANALYST II.

En pratique certains des analyseurs du principe test par test peuvent être utilisés pour effectuer des bilans complets lorsqu'il est prévu qu'on puisse sélectionner un groupe de tests constituant un bilan significatif.

Les analyseurs selon le principe « test par test » ont des avantages :
1) la possibilité de sélectionner un test élémentaire (travail au test) conduit à un coût réduit à l'unité pour le diagnostic d'un patient,
2) il est possible de composer des bilans 'à la carte', par une sélection appropriée des tests élémentaires désirés pour constituer le bilan spécifique recherché.

Par contre, ces analyseurs ont des inconvénients:
3) le matériel est complexe à fabriquer, pour permettre les diverses options possibles,
4) la gestion des boîtes de tests est difficile (surveillance, boîte de test par boîte de test, des situations de péremption ou de réapprovisionnement),
5) les boîtes unitaires de test doivent faire l'objet de manipulations individuelles pour permettre la composition des bilans,
6) les bilans possibles sont limités en nombre de tests élémentaire (car l'élément unitaire de test élémentaire est volumineux en taille),
7) des calibrations individuelles sont dans la plupart des cas nécessaires,
8) la fiabilité des résultats vétérinaires n'est que relative en raison de leur manque d'adaptabilité aux concentrations plasmatiques des paramètres du monde animal (domaine humain non compris),
9) ces analyseurs mettent en oeuvre une lampe flash sans référence, ou un système d'éclairage par lampe tungstène, ne permettant pas de mesure extrêmement précise sur certains paramètres comme les T4 (c'est-à-dire certain tests immuno) et les électrolytes (Na, K+, CI-).

Des matériels, comme l'analyseur SPOTCHEM EZ de la société ARKRAY, offrent la possibilité immédiate de choisir le mode test par test ou le mode bilan, mais le mode bilan est limité à 9 paramètres, or cette quantité de paramètres (9 tests) dans un bilan est très souvent insuffisante pour permettre un diagnostic significatif.

Les analyseurs à rotor pour le type « bilan complet » ont divers avantages par rapport aux analyseurs du type « test par test » :
1) les appareils sont plus simples dans leur principe,
2) les manipulations nécessaires sont réduites,
3) les rotors permettent une gestion aisée (faible volume d'encombrement et gestion aisée des dates de péremption),
4) les bilans possibles sont plus complets (jusqu'à 16 paramètres, en pratique),
5) les bilans sont « déjà prêts », c'est-à-dire préconçus, de sorte qu'il n'y a pas de travail de composition de ces bilans,
   En contrepartie, ces analyseurs à rotor ont les inconvénients suivants :
6) les calibrations nécessaires sont chères (cas de calibrations automatiques réalisées avec des étalons embarqués, dans des analyseurs tels que celui dénommé VETSCAN & PICCOLO de ABAXIS) ou fastidieuses (cas de calibrations manuelles, dans des analyseurs tels que celui dénommé ANALYSTII de HEMAGEN),
7) la dilution obligatoire des plasmas est réalisée par une unité de dilution à ratio fixe, automatique, chère et embarquée au sein du rotor (cas de l'analyseur d'ABAXIS) ou à l'aide d'un diluteur manuel externe ayant pour défaut de prendre beaucoup de volume sur la paillasse (ce qui peut être rédhibitoire pour des appareils dit compacts et ayant pour clientèle essentielle des cabinets médicaux à l'espace de travail restreint),
8) la fiabilité des résultats vétérinaires n'est également que relative en raison de leur manque d'adaptabilité aux concentrations plasmatiques des paramètres du monde animal,
9) la lampe flash n'a pas de capteur de lumière de référence, ou est un système d'éclairage par lampe tungstène, ne permettant pas de mesure extrêmement précise sur certains paramètres comme les T4 et les électrolytes (Na+, K+, CI-),
10) puisqu'il n'y a pas de gestion des tests élémentaires, l'établissement d'un bilan global est onéreux lorsque le client ne désire que quelques tests et non pas tous les tests qui lui sont proposés dans un bilan.

Le document US 5 478 750 présente un analyseur photométrique pour mesurer la concentration de substances dans un fluide, utilisant un rotor et des cuvettes dont certaines contiennent des réactifs. L'analyseur mesure l'absorption à différentes fréquences. Le dispositif comprend de plus des moyens pour effectuer une calibration automatique.

Le document Schembri et al., J. Autom. Chem. 17 3 1995, 99-104 présente un analyseur utilisant la force centrifuge et les forces de capillarité. Un opérateur applique les échantillons dans un rotor contenant le diluant et des réactifs secs. Le dispositif mesure la quantité requise de sang et sépare les cellules rouges, puis effectue une dilution et une distribution dans les cuvettes de réaction. L'instrument mesure les réactions simultanément en utilisant neuf longueurs d'onde et calcule des résultats d'absorbance.

Le document US 4 515 889 présente un procédé pour effectuer des déterminations analytiques par mélange et incubations d'une solution échantillon avec au moins un réactif et la mesure optique d'un paramètre dans le mélange réactionnel incubé. Le mélange, l'incubation et la mesure ont lieu pendant la centrifugation qui amène la solution à travers des espaces interconnectés présentant une résistance au flux et mélangeant les composants réactionnels.

Le document US 5 149 501 enseigne l'utilisation d'un instrument à chambre multiple permettant une détermination automatique des concentrations en cholestérol et en triglycérides d'un échantillon de sang. L'échantillon subit une séparation en cellules et plasma. Une partie du plasma est déposée dans une chambre de séparation HDL où le cholestérol LDL et VLDL est précipité. Le surnageant est placé dans une chambre de réaction avec un réactif à cholestérol. Du plasma dilué est placé dans deux chambres de réaction où il réagit avec des réactifs à cholestérol et triglycérides. Un système colorimétrique mesure l'absorbance des liquides de réaction.

### Problème technique et solution apportée par l'invention

L'invention a pour objet un analyseur présentant les avantages des analyseurs à rotor, sans en présenter les inconvénients.
L'invention propose à cet effet un analyseur compact de biochimie sèche sur échantillons sanguins intégrant sur un même châssis :
- une chambre de mesure adaptée à recevoir un rotor consommable comportant au moins une chambre centrale de réception d'échantillon dilué et, autour de cette chambre centrale, une pluralité de micro-cuves contenant des réactifs secs et adaptées à recevoir du fluide depuis cette chambre centrale lors d'une centrifugation de ce rotor,
- un module de dilution numérique à un ratio fixe ou variable défini en fonction de l'espèce de l'échantillon à analyser et adapté à disposer un échantillon dilué dans une chambre centrale de ce rotor à partir d'un échantillon sanguin d'une espèce donnée,
- un module de centrifugation d'échantillon adapté à assurer, à l'intérieur de la chambre de mesure, la centrifugation de ce rotor et son positionnement angulaire en une pluralité de positions angulaires,
- un module optique adapté à appliquer des faisceaux de lumière à l'intérieur de la chambre de mesure, en des zones pouvant être occupées par des micro-cuves du rotor, dans certaines au moins desdites positions angulaires du rotor, ce module optique comportant une source lumineuse du type flash-lamp et un capteur de lumière de référence,
- un système électronique de traitement et de commande pour commander le module de dilution, le module optique et le module de centrifugation, acquérir des mesures à partir des faisceaux interceptés par lesdites zones de la chambre de mesure, traiter ces mesures et en déduire des résultats, ledit système de traitement comportant un lecteur de mémoire externe adapté à lire une mémoire externe transportable contenant au moins des informations caractéristiques d'au moins le rotor consommable en cours d'utilisation.

Selon des caractéristiques avantageuses d'un analyseur selon l'invention, éventuellement combinées :
- la mémoire externe contient des informations concernant la calibration du rotor et la péremption des réactifs secs contenus dans ce rotor,
- la mémoire externe contient en outre des informations, mises à jour par le système électronique de traitement, sur l'utilisation du rotor en cours d'utilisation ; cela permet de suivre l'utilisation d'un rotor donné,
- la mémoire externe contient des informations, mises à jour par le système électronique de traitement, sur les nombres de tests effectués avec les réactifs secs respectifs, ce qui permet, le cas échéant, de suivre les tests restant possibles et ceux déjà entièrement consommés ; cela permet aussi une tarification en fonction de l'usage fait des rotors,
- la mémoire externe contient des informations, mises à jour par le système électronique de traitement, sur les nombres de tests pouvant encore être effectués avec les réactifs secs ; il est en effet possible de gérer le remplacement des rotors,
- en variante, la mémoire externe contient des informations, mises à jour par le système électronique de traitement, sur des tests effectués et demandés ainsi que sur des tests effectués mais non demandés ; cela permet de ne pas avoir à recommencer le prélèvement d'un échantillon sur un patient humain ou animal ou à recommencer des tests ; en effet, il peut ainsi être prévu qu'un certain lot de tests (voire la totalité des tests possibles) est toujours effectué, mais que les résultats n'en sont accessibles qu'en fonction des test demandés (pour lesquels il y a facturation), de sorte qu'une demande ultérieure de tests est traitée par simple mise à disposition des résultats des tests nouvellement demandés (et facturation additionnelle),
- la mémoire externe contient des informations caractéristiques d'un lot de rotors consommables ; en effet, les rotors sont généralement fabriqués et achetés par lots,
- la mémoire externe est une carte à puce, ce qui est un type de mémoire facile à fabriquer et à gérer ; en variante, cette mémoire externe est une carte de type compact flash, ou encore une clé USB, ce qui correspond également à des mémoires dont les performances sont bien connues,
- le diluteur numérique comporte un piston actionné par un moteur, ce piston et ce moteur étant montés sur le châssis et une poignée de manipulation munie d'un bec de prélèvement et d'injection, ce qui permet une dilution de l'échantillon à analyser à un ration défini en fonction de l'espèce de l'échantillon à analyser.
- le module de centrifugation comporte un moteur pas à pas excentré, des pignons fixés sur l'arbre de ce moteur et sur un arbre d'entraînement portant le rotor en cours d'utilisation et une courroie coopérant avec ces pignons, cela permet une flexibilité dans le pas angulaire dont tourne le rotor à chaque pas du moteur
- le capteur de lumière de référence est monté, au sein du module optique, sur un séparateur de faisceau,
- le module optique comporte en outre un monochromateur, tel qu'une roue à filtre,
- le système électronique de commande comporte des moyens de saisie pour saisir l'espèce à laquelle appartient l'échantillon sanguin, et active les moyens de dilution en fonction de cette saisie,
- le système électronique de commande comporte des moyens de saisie pour saisir des tests élémentaires à effectuer sur le rotor en cours d'utilisation,
- il comporte un module de régulation par air pulsé et système Peltier de la température de la chambre de mesure à une température précise et stable.

L'invention utilise avantageusement des rotors du type de ceux mis en oeuvre par les analyseurs de HEMAGEN (voir ci-dessus).

Un analyseur selon l'invention répond au problème technique défini ci-dessus. En particulier, en référence aux inconvénients mentionnés ci-dessus à propos des analyseurs à rotor, on peut noter que :
- Inconvénient 6 : les calibrations chères ou fastidieuses sont évitées grâce à un système de mémoire externe, type carte à puce, sur lequel ont été préalablement stockées les valeurs de calibrations, faites en usine, relatives aux rotors prêts à l'emploi ; ce système de mémoire externe peut être livré avec le pack de rotors prêt à l'emploi et est introduit lors de l'utilisation du premier rotor, ce qui permet à l'analyseur de mémoriser l'ensemble des calibrations relatives aux rotors concernés ; il en découle un avantage significatif en coût, en temps et en fiabilité pour ces calibrations,
- Inconvénient 7 (deuxième partie) : un diluteur compact est intégré au châssis de l'appareil, de sorte qu'il ne prend aucune place supplémentaire sur la paillasse,
- Inconvénients 7 (première partie) et 8 : le diluteur intégré est numérique et permet une dilution précise et 'à la carte' en fonction des espèces animales (y compris l'espèce humaine) à analyser ; cette sélection de la dilution se fait automatiquement au moment de la sélection, sur l'analyseur, de l'espèce biologique en cause et permet une adaptabilité des concentrations plasmatiques aux plages de linéarités de mesure sur l'appareil,
- Inconvénient 9 : l'utilisation d'un capteur de lumière de référence permet une précision nettement accrue pour les mesures de paramètres délicats comme le T4 ou les électrolytes,
- Inconvénient 10 : la mise en oeuvre du système de mémoire externe (typiquement du type carte à puce) permet par un décompte interne une gestion des rotors au test par test.

### Description de l'invention

Des objets, caractéristiques et avantages de l'invention ressortent de la description qui suit, donnée à titre d'exemple illustratif non limitatif, en regard des dessins annexés sur lesquels :
- la figure 1 est un diagramme structurel d'un analyseur conforme à l'invention,
- la figure 2 est un schéma détaillé du bloc optique de cet analyseur, et

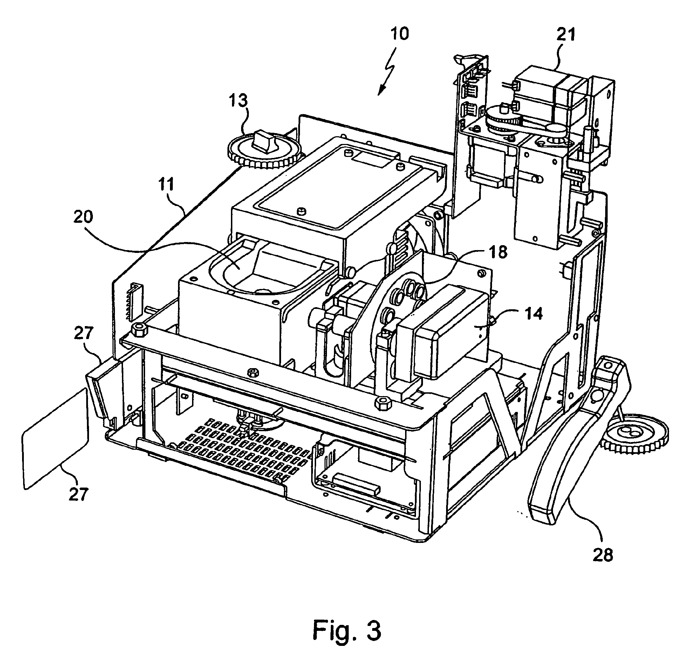

- la figure 3 est une vue en perspective éclatée de cet analyseur.

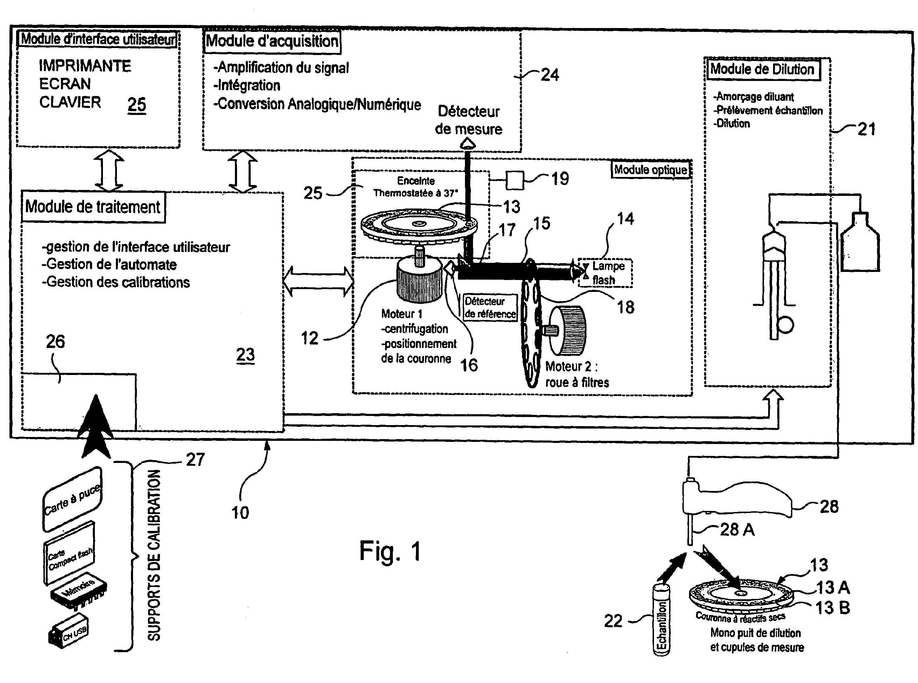

Les figures représentent un analyseur compact de biochimie sèche (analyseur du type à rotor) selon l'invention 10 qui intègre dans un même châssis 11 :
- un centre de centrifugation d'échantillons 12, adapté à recevoir des rotors 13 comportant des micro-cuves de mesure 13A, 13B, etc, contenant respectivement une préparation sèche réactionnelle (un rotor est ainsi, de manière connue en soi notamment dans les analyseurs de ABAXIS ou de HEMAGEN, l'ensemble d'une structure plastique alvéolaire et de réactifs secs dans lesdites alvéoles), et à assurer une distribution et un remplissage homogène de ces micro-cuves,
- un module optique adapté à assurer une mesure spectrophotomètrique comportant (i) une source lumineuse 14 formée d'une lampe flash, (ii) un canal optique 15 adapté à transporter le faisceau lumineux émis par la source et muni d'un capteur de lumière de référence 16 monté sur un séparateur de faisceau 17 et (ii) une roue à filtre ou un monochromateur 18 adapté à sélectionner une longueur d'onde,
- un système 19 de régulation de température précis autour de 37°C pour la chambre de mesure/Centrifugation 20 contenant le rotor,
- un module de dilution, ou diluteur, numérique 21 adapté à réaliser une dilution simple ou double, pour assurer la préparation de l'échantillon (par dilution manuelle ou automatique d'un échantillon 22 de plasma à analyser),
- un ensemble électronique de commande comportant (i) un module de traitement 23 assurant l'ensemble du pilotage des fonctions mécaniques (dilution, centrifugation, thermostatisation, lampe Flash), (ii) un module d'acquisition 24 assurant la mesure intégrée de la lumière flash monochromatique transmise au travers de chacune des micro-cuves de mesure, et le calcul des valeurs mesurées et corrigées (NB : cette fonction de mesure peut, en variante, être assurée par le module de traitement), (iii) un module de saisie et de visualisation 25 pour la présentation des résultats (sélection, affichage, impression) ainsi que l'ensemble de l'interface utilisateur,
- un lecteur 26, en pratique connecté au module de traitement pour lire le contenu d'un élément de stockage d'informations transportable 27 réalisant le stockage d'informations relatifs aux rotors et à leur utilisation (la figure 1 montre, sous la référence 27, divers éléments possibles de stockage (carte à puce, carte Compact Flash, mémoire, clé USB, etc).

Selon une caractéristique de l'invention, un analyseur à rotor comporte ainsi un diluteur 21 intégré à dosage 'numérique' lié à l'espèce dont provient l'échantillon à analyser. Ce diluteur, ici du type mono-piston, autorise une préparation de l'échantillon (plasma) en une ou deux dilutions successives, manuellement ou automatiquement, et permet donc que, selon l'invention, cette dilution soit adaptée aux concentrations particulières des paramètres plasmatiques de l'espèce à doser (c'est-à-dire à analyser). Ce diluteur intégré dit 'numérique' possède la particularité de pouvoir prélever une quantité programmée et/ou programmable de plasma puis de diluer ce plasma dans une quantité programmée et/ou programmable de diluant. Les valeurs de programmation de la dilution (prélèvement du plasma et ajout de diluant) étant liées aux espèces animales (incluant l'espèce humaine, donc l'Homme) à analyser, ces valeurs de programmation étant introduites dans l'analyseur comme indiqué ci-dessous.

Selon encore une autre caractéristique de l'invention, l'analyseur est capable de gérer les données liées à chaque type de réactifs (rotors) par le biais d'un support mémoire externe (type carte à puce, carte SD, etc.) permettant le stockage d'informations tels que :
a) Le type de paramètres/analyses (profil) définissant les réactifs contenus dans les alvéoles du rotor, le modèle de rotor, ainsi que son numéro de lot et référence,
b) la date de péremption des réactifs et donc du rotor, à partir de la date de fabrication du rotor incluant même, avantageusement, son historique thermique de transport et stockage,
c) les valeurs des calibrations et des corrections spécifiques de chaque paramètre liées à chaque lot de rotors,
d) le nombre de paramètres/tests pouvant être réalisés, ou du moins rendus accessibles à la demande, avec l'ensemble des rotors achetés par le client (selon un principe par exemple analogue à celui des unités d'une carte téléphonique). En effet, ce support mémoire externe autorise aussi l'utilisation et la taxation 'au test' des rotors prévus en mode dit 'sélectif (sélection test par test sur l'ensemble du panel dit « profil » du rotor) réalisant ainsi une facturation plus allégée et/ou adaptée en fonction des bilans spécifiques créés par l'opérateur utilisant l'appareil.

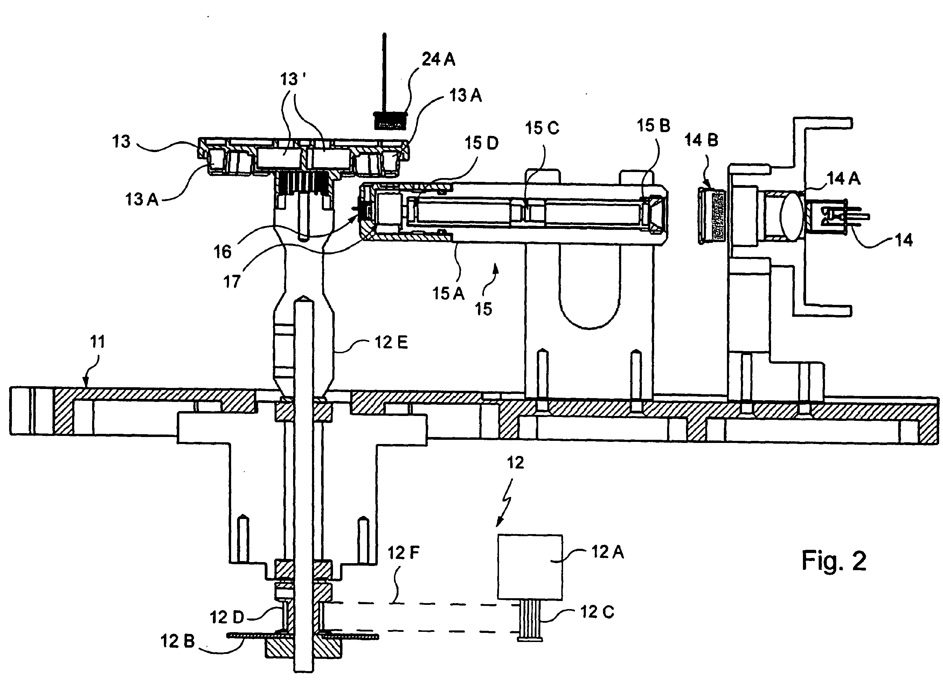

Divers commentaires peuvent être faits sur les éléments constitutifs de l'analyseur représenté.
**1) Rotors** : La morphologie des rotors utilisés dans un analyseur conforme à l'invention est d'un type connu depuis de nombreuses années. Il s'agit d'une structure plastique circulaire 13 embarquant, en son centre une ou plusieurs chambres 13' de réception d'un échantillon de plasma sanguin dilué (automatiquement ou manuellement), et à sa périphérie un ensemble de micro-cuves 13A contenant des réactifs secs de biochimie définissant les 'paramètres'. Ces rotors peuvent accueillir de quelques unes jusqu'à 24 (ou plus) micro-cuves de mesure. La mise en rotation de ce rotor va, par centrifugation, distribuer (par la force centrifuge) l'échantillon dilué placé en position centrale vers la périphérie d'une manière homogène et simultanée vers les micro-cuves. La méthode consiste ensuite à lire les réactions chimiques colorimétriques spécifiques de chaque paramètre/test (en tout cas chaque paramètre/test demandé), dans chacune des micro-cuves qui lui y est alloué, par une méthode spectrophotomètrique mettant en oeuvre le module optique.
**2) Système optique** : Le système optique (voir la figure 2) comporte, de manière connue en soi, (i) une source lumineuse de type flash 14, (ii) un canal optique 15 formé d'un tube support 15A et composé de lentilles optiques véhiculant le rayon lumineux jusqu'à l'échantillon à mesurer (iii) et d'un système de sélection de longueur d'onde spécifique (roue à filtres ou monochromateur) à utiliser pour la mesure de la réaction chimique (non représenté sur la figure 2). Dans l'exemple ici considéré, la source lumineuse est au xénon et est suivie d'un condensateur asphérique 14A et d'un filtre interférentiel 14B ; le canal optique comporte ici une pupille d'entrée 158, une lentille de champ 15C, une pupille de sortie 15D) Ce système optique se différencie ici par une technique innovante sur ce type d'analyseur super-compact consistant en l'incorporation d'un capteur de lumière de référence 16 sur l'axe optique derrière un séparateur de faisceau 17 permettant d'assurer le suivi (i) des éclairs de flash au coup par coup (qui ne sont pas toujours homogènes en toutes circonstances), (ii) et de la puissance résiduelle globale du flash, qui en deçà d'une certaine puissance ne peut plus être exploitable. On observe sur cette figure 2 que le faisceau traverse ensuite une micro-cuve 13A et atteint une photodiode de mesure 24A faisant partie du module d'acquisition.
**3) Système de centrifugation** : Le système de centrifugation 12 est réalisé à partir d'un assemblage mécanique incluant (i) un moteur pas à pas schématisé sous la référence 12A, (ii) un arbre de centrifugation et d'entraînement 12E supportant un rotor et référencé optiquement (voir la roue 12B de la figure 2), (iii) des pignons 12C et 12D crantés montés sur l'axe moteur et sur l'arbre de centrifugation 12E et (iv) une courroie crantée 12F reliant ces 2 pignons ; ce système de centrifugation autorise ainsi (a) une centrifugation de l'échantillon par rotation à grande vitesse, puis (b) un positionnement précis (précision du pas moteur) de chacune des micro-cuves de mesure contenant l'échantillon réactionnel à mesurer devant le faisceau optique. Une singularité de ce montage réside dans le fait que (i) pour les rotors comportant 24 micro-cuves le positionnement des micro-cuves dans l'axe du faisceau optique est obtenu grâce à la précision du 'pas moteur' pouvant être effectué ici autrement que par des moteurs 24 ou 48 pas au tour qui n'existent plus, (ii) pour des rotors possédant plus ou moins de micro-cuves de mesure, un simple choix judicieux des roues crantées (nombre de dents sur l'un et l'autre des pignons) suffit à satisfaire l'adaptation de n'importe quel type de rotor à analyser sur ce type d'appareil.
**4) Système de dilution embarqué (intégré) 21** : le diluteur numérique mono-piston embarqué permet une dilution manuelle ou automatique en une ou plusieurs étapes de l'échantillon de plasma sanguin. Il se compose (i) d'un moteur pas à pas relié à (ii) un simple piston à deux fonctions, celle de prélèvement du plasma et celle de sa dilution, par (iii) un jeu de pignons et courroie crantés le tout activé par (iv) une poignée manipulatrice externe 28 possédant un bec de prélèvement 28A. Selon une particularité tout à fait avantageuse de l'invention :
   - ce diluteur mono-piston est intégré dans le même châssis que l'ensemble des autres fonctions de l'appareil et ceci dans le cadre d'un appareil particulièrement compact d'analyse de biochimie. En effet, actuellement, la plupart des analyseurs de biochimie de taille restreinte nécessitant un diluteur comportent un tel diluteur en externe (HEMAGEN) ou un diluteur intégré dans le rotor (ABAXIS) ; sinon, il s'agit d'un analyseur de biochimie de bien plus grosse taille n'entrant pas dans le concept « compact » de l'invention (en effet ces analyseurs de grosse taille possèdent en général plusieurs diluteurs architecturés autour de plusieurs pistons spécifiques des prélèvements et des dilutions).
   - les dilutions sont adaptables en fonction des espèces animales (incluant l'espèce humaine) à analyser. Cette adaptabilité est réalisée par le pilotage numérique du diluteur mono-piston à partir des valeurs pré-programmées de dilution du plasma de l'espèce sélectionnée. Cette adaptabilité de dilution offre l'énorme avantage d'ajuster la concentration usuelle des paramètres plasmatiques de l'espèce aux plages de mesures optiques des paramètres.
**5) Système de chambre de mesure** : la chambre de mesure, classiquement accessible par un couvercle supérieur, va réceptionner le rotor préparé (plasma dilué et distribué). Selon une particularité avantageuse de l'invention, dans cette chambre sont effectués (i) la thermostatisation à 37° de l'ensemble chambre plus rotor, (ii) la centrifugation de(s) l'échantillon(s) dilué(s) et, à la fin, la mesure optique des micro-cuves ayant réceptionné l'échantillon(s) dilué(s). La thermostatisation de l'échantillon se fait avantageusement par air chaud pulsé et régulé par une sonde électronique pilotant un bloc de chauffe à filament et un système de refroidissement à effet Peltier. Le tout permet de garantir une température interne de la chambre stabilisée précisément aux environs de 37°, et ceci tout au long du processus de centrifugation du plasma dilué puis de la mesure des paramètres.
**6) Système gestion des rotors (réactifs) par support mémoire externe** : Un support de mémoire externe type 'carte à puce' (ou autre) est livré avec chaque boîte de réactif (rotors). Ce support mémoire a été préparé en usine et embarque des informations concernant les rotors auxquels il est lié, informations incluant (i) l'identification (type et N° de lot) des rotors, (ii) la validité (et donc la péremption) des rotors, (iii) les données relatives aux calibrations et/ou corrections des paramètres des rotors, (iv) la gestion 'à la carte' du prix du test en fonction des résultats demandés et des tests réalisés (comme indiqué ci-dessous, il peut y avoir plus de tests réalisés que de tests demandés). A la réception des réactifs (rotors) ou juste avant l'analyse, le client (l'opérateur) introduit le support mémoire dans l'analyseur et charge ainsi dans l'appareil les données relatives aux rotors reçus. Ces données doivent bien entendues être corrélées avec l'identification des rotors eux-mêmes avant tout et permettent avantageusement la gestion :
   a) de la date de péremption : cette date est la date limite d'utilisation des rotors depuis la date de leur fabrication.
   b) l'historique thermique du rotor : cet historique thermique peut permettre de corriger le temps limite d'utilisation en réduisant la date de péremption en fonction des 'aléas' thermiques subis par le rotor au cours de son transport et de son stockage.
   c) les données de calibration de chacun des paramètres du rotor :
      la calibration des rotors rendue nécessaire par la fluctuation des composants des réactifs est réalisée en usine et permet une économie de coût considérable face à la concurrence qui doit, elle, posséder des calibrants embarqués sur les rotors (ABAXIS) ou est obligée de calibrer l'analyseur à chaque nouveau lot de rotors (HEMAGEN).
   d) les données de correction de chacun des paramètres du rotor : la correction des rotors rendue nécessaire par la fluctuation des composants plastiques et autres est réalisée en usine. Ces données offrent une meilleure qualité de mesure.
   e) des profils dit 'sélectifs' : le support mémoire embarque un nombre de paramètres prépayés que le client final peut gérer à sa guise en mode 'à la carte' appelé aussi mode 'sélectif'. Ce mode avantageux de gestion d'utilisation des rotors permet une utilisation partielle du rotor en sélectionnant au 'paramètre par paramètre' les bilans désirés. Seuls les paramètres sélectionnés (rendus, c'est-à-dire rendus accessibles à l'opérateur) seront pris en compte dans le mode de décompte par rapport au nombre maximum de tests autorisés sur le support mémoire (comme une carte téléphonique). L'énorme avantage de ce mode de gestion préféré est (i) la taxation des paramètres à l'unité à partir d'un réactif orienté pour une utilisation avant tout globale dite 'profil', ce qui n'existe dans aucun analyseur dans ce domaine, (ii) l'obtention immédiate de paramètres complémentaires au bilan sélectif réalisé, puisque 'in fine' tous les paramètres du rotor ont été réalisés (c'est-à-dire que tous les tests ont été effectués, puis lus), et ceci en décrémentant simplement le nombre de paramètres prépayés. Il peut en effet y avoir, de manière avantageuse, réalisation, lecture optique et mémorisation de tous les tests, mais mise à la disposition de l'opérateur des seuls résultats des tests que celui aura sélectionnés. Il en découle qu'il est possible de revenir ultérieurement sur l'ensemble des résultats d'un échantillon, et d'avoir accès à des résultats de tests complémentaires si, par exemple, l'analyse des tests sélectionnés en un premier temps le justifie. Cette mémorisation de résultats de tests autres que ceux effectivement sélectionnés au départ selon un premier profil (de manière avantageuse, l'ensemble des résultats des tests possibles avec un rotor donné est mémorisé) offre une possibilité de rappel « à la carte », même plusieurs jours après l'exécution de ce premier profil, ce qui évite d'avoir à effectuer à nouveau (i) le rappel du patient qui peut ne plus être présent au sein de la clinique (ou du laboratoire), (ii) un nouveau prélèvement du sang du patient (qui peut être un acte délicat dans certaines situations critiques), et (iii) une nouvelle manipulation et préparation d'un nouveau bilan avec la consommation d'un nouveau rotor (ce qui pourrait conduire à un coût élevé).

### CYCLE OPERATIONNEL :

**1) Prélèvement sanguin**, centrifugation : Un échantillon sanguin 22 d'une espèce animale (y compris l'espèce humaine) est prélevé sur un individu sur un anticoagulant spécifique puis centrifugé (non représenté).
**2) Préparation, dilution** : L'espèce animale à analyser est sélectionnée dans la banque de données de l'analyseur (action sur le module d'interface 25, ou par insertion d'une mémoire 27 dans le lecteur 26), et le plasma (partie supérieure du sang centrifugé) est présenté au bec 28A de prélèvement de la poignée manipulatrice 28 du diluteur 21. Les dilutions du plasma en vue de sa préparation dans le rotor, au ratio de dilution défini et sélectionné dans la banque interne de l'analyseur, sont ainsi réalisées par l'opérateur.
**3) Introduction du rotor** : La ou les dilutions étant réalisée(s), le rotor est introduit, après ouverture du couvercle supérieur de la chambre de mesure, dans la chambre de l'analyseur. Les données caractérisant le rotor sont alors lues sur sa partie supérieure par un code à barres préalablement inscrit en usine et sont corrélées avec les données d'identification, de calibration, de correction et de management des paramètres du rotor, apportées par le support de mémoire externe 27.
**4) Sélection des tests si en mode sélectifs** : elle n'est qu'optionnelle (en mode profil aucune sélection n'est à faire, le rotor sera lu complètement, micro-cuve après micro-cuve), réalisée en pratique au moyen du module d'interface 25.
**5) Lancement de l'analyse** : Le couvercle supérieur de la chambre de mesure étant fermé, la touche 'départ mesure' est activée (sur le module d'interface 25).
**6) Thermostatisation du rotor** : Grâce à l'élément de commande de température 19, la température de la chambre et donc celle du rotor et du contenu de ses chambres centrales 13' sont amenées à 37°C pendant un temps donné par air pulsé et la température est contrôlée par effet Peltier.
**7) Centrifugation, distribution du plasma** : Le plasma dilué au centre du rotor est distribué dans chaque micro-cuve de mesure par centrifugation. Cette centrifugation s'effectue aussi pendant un temps précis à une vitesse de centrifugation précise.
**8) Mesure des échantillons** : La centrifugation réalisée, les micro-cuves de mesure sont amenées une à une devant un faisceau lumineux à longueur d'onde spécifique lié à chaque paramètre (réactif) contenu dans la micro-cuve de mesure (il suffit d'actionner la roue 18). Différentes mesures sont ainsi réalisées (module d'acquisition 24), certains paramètres étant mesurés en 'point final' (après équilibre), d'autre paramètres étant mesuré en 'cinétique' (en fonction du temps).
**9) Calibration, correction des résultats** : en fin d'analyse les résultats de chacune des mesures sont calibrés et/ou corrigés (à l'aide du module de traitement 26) en fonction des données ayant été embarquées sur le support mémoire externe lié aux rotors.
**10) Rendu des résultats** : En fonction du mode choisi pour obtenir les résultats attendus, mode profil total ou sélectif, les résultats sont alors rendus c'est-à-dire visualisés et/ou imprimés et/ou exportés par une interface informatique (par le module 25).

D'un point de vue pratique, le prélèvement et l'analyse de l'échantillon peuvent être réalisés par l'assistante ou l'aide soignante tandis que le médecin traitant, ou le vétérinaire, quelquefois occupé à cet instant (médecin en urgence à l'extérieur, ou le vétérinaire en chirurgie le matin) n'intervient que tardivement pour 'lire' et interpréter l'analyse. Ceci vaut surtout pour des bilans de routine où le patient n'a pas besoin d'une consultation immédiate.

L'exemple qui suit permet d'apprécier la flexibilité d'utilisation qu'offre un analyseur conforme à l'invention, dans le cas où le support mémoire (carte à puce, ou tout autre support électronique de mémoire) mémorise plus de résultats de tests qu'il n'en est demandé initialement.

Un échantillon de sang du patient (humain ou animal) est prélevé le matin (« préprendial ») pour une analyse de sang devant opérer une vérification des paramètres suivants : (1) le Glucose, (2) l'Urée. Ce bilan « 2 paramètres » est certainement un des plus petits bilans que l'on puisse réaliser en contrôle de routine (réaction normale d'un praticien qui ne veut pas dépenser trop pour un contrôle de routine). Le médecin (ou le vétérinaire, selon le cas) peut découvrir une anormalité forte d'un des paramètres au point qu'il souhaite consulter quelques paramètres complémentaires comme (3) Cholestérol, (4) Triglycérides. Il n'y a nul besoin de rappeler le patient pour un nouveau prélèvement (surtout si le prélèvement n'est plus disponible) ni même de re-manipuler un autre extrait de l'échantillon resté disponible en vue de nouvelles analyses au moyen d'un nouveau rotor. Il suffit à ce médecin/vétérinaire de rappeler sur l'écran de l'analyseur le bilan déjà réalisé et mémorisé du patient en question et d'ouvrir, dans toute la liste des tests effectués et disponibles pouvant être visualisés, les seuls tests (3) Cholestérol et (4) Triglycérides. Ces 2 derniers tests seront alors affichés, imprimés et décomptés de la carte à puce. Une telle manipulation est aussi intéressante dans les cas où le patient possède un historique chez le médecin de sorte que le suivi du patient peut être complété à tout moment dans le temps par une 'visualisation' plus large de l'état du patient au temps 't', et ceci rétrospectivement.

## Revendications

1. Analyseur compact de biochimie sèche sur échantillons sanguins intégrant sur un même châssis (11) :
- une chambre de mesure (20) adaptée à recevoir un rotor consommable (13) comportant au moins une chambre centrale (13') de réception d'échantillon dilué et, autour de cette chambre centrale, une pluralité de micro-cuves (13A, 13B) contenant des réactifs secs et adaptées à recevoir du fluide depuis cette chambre centrale lors d'une centrifugation de ce rotor,
- un module de dilution numérique (21) à un ratio fixe ou variable défini en fonction de l'espèce de l'échantillon à analyser et adapté à disposer un échantillon dilué dans une chambre centrale de ce rotor à partir d'un échantillon sanguin (22) d'une espèce donnée,
- un module de centrifugation d'échantillon (12) adapté à assurer, à l'intérieur de la chambre de mesure, la centrifugation de ce rotor et son positionnement angulaire en une pluralité de positions angulaires,
- un module optique adapté à appliquer des faisceaux de lumière à l'intérieur de la chambre de mesure, en des zones pouvant être occupées par des micro-cuves du rotor, dans certaines au moins desdites positions angulaires du rotor, ce module optique comportant une source lumineuse (14) du type flash-lamp et un capteur de lumière de référence (16),
- un système électronique de traitement et de commande (23, 24, 25) pour commander le module de dilution, le module optique et le module de centrifugation, acquérir des mesures à partir des faisceaux interceptés par lesdites zones de la chambre de mesure, traiter ces mesures et en déduire des résultats, ledit système de traitement comportant un lecteur de mémoire externe (26) adapté à lire une mémoire externe transportable (27) contenant au moins des informations caractéristiques d'au moins le rotor consommable en cours d'utilisation.

2. Analyseur selon la revendication 1, **caractérisé en ce que** la mémoire externe contient des informations concernant la calibration du rotor et la péremption des réactifs secs contenus dans ce rotor.

3. Analyseur selon la revendication 1 ou la revendication 2, **caractérisé en ce que** la mémoire externe contient en outre des informations, mises à jour par le système électronique de traitement, sur l'utilisation du rotor en cours d'utilisation.

4. Analyseur selon la revendication 3, **caractérisé en ce que** la mémoire externe contient des informations, mises à jour par le système électronique de traitement, sur les nombres de tests effectués avec les réactifs secs respectifs.

5. Analyseur selon la revendication 4, **caractérisé en ce que** la mémoire externe contient des informations, mises à jour par le système électronique de traitement, sur les nombres de tests pouvant encore être effectués avec les réactifs secs.

6. Analyseur selon la revendication 3, **caractérisé en ce que** la mémoire externe contient des informations, mises à jour par le système électronique de traitement, sur des tests effectués et demandés ainsi que sur des tests effectués mais non demandés.

7. Analyseur selon l'une quelconque des revendications 1 à 6, **caractérisé en ce que** la mémoire externe contient des informations caractéristiques d'un lot de rotors consommables.

8. Analyseur selon l'une quelconque des revendications 1 à 7, **caractérisé en ce que** la mémoire externe est une carte à puce.

9. Analyseur selon l'une quelconque des revendications 1 à 7, **caractérisé en ce que** la mémoire externe est une carte de type compact flash.

10. Analyseur selon l'une quelconque des revendications 1 à 7, **caractérisé en ce que** la mémoire externe est une clé USB.

11. Analyseur selon l'une quelconque des revendications 1 à 10, **caractérisé en ce que** le diluteur numérique comporte un piston actionné par un moteur, ce piston et ce moteur étant montés sur le châssis et une poignée de manipulation munie d'un bec de prélèvement et d'injection, ce qui permet une dilution de l'échantillon à analyser à un ratio défini en fonction de l'espèce de l'échantillon à analyser.

12. Analyseur selon l'une quelconque des revendications 1 à 11, **caractérisé en ce que** le module de centrifugation comporte un moteur pas à pas excentré, des pignons fixés sur l'arbre de ce moteur et sur un arbre d'entraînement portant le rotor en cours d'utilisation et une courroie coopérant avec ces pignons.

13. Analyseur selon l'une quelconque des revendications 1 à 12, **caractérisé en ce que** le capteur de lumière de référence (16) est monté, au sein du module optique, sur un séparateur de faisceau (17).

14. Analyseur selon la l'une quelconque des revendications 1 à 13, **caractérisé en ce que** le module optique comporte un monochromateur, tel qu'une roue à filtre (18).

15. Analyseur selon l'une quelconque des revendications 1 à 14, **caractérisé en ce que** le système électronique de commande comporte des moyens de saisie pour saisir l'espèce à laquelle appartient l'échantillon sanguin, et active les moyens de dilution en fonction de cette saisie.

16. Analyseur selon l'une quelconque des revendications 1 à 15, **caractérisé en ce que** le système électronique de commande comporte des moyens de saisie pour saisir des tests élémentaires à effectuer sur le rotor en cours d'utilisation.

17. Analyseur selon la revendication 1 à 16, **caractérisé en ce qu'**il comporte un module (19) de régulation par air pulsé et système Peltier de la température de la chambre de mesure (20) à une température précise et stable.

## Claims

1. Compact analyser for dry biochemical analysis of blood samples, integrating onto a common chassis (11):
- a measuring chamber (20) adapted to receive a disposable rotor (13) including at least one diluted sample receiving central chamber (13') and, around that central chamber, a plurality of microtanks (13A, 13B) containing dry reagents and adapted to receive fluid from that central chamber during centrifuging of this rotor,
- a digital dilution module (21) of fixed or variable ratio defined as a function of the species of the sample to be analysed and adapted to dispose a diluted sample into a central chamber of this rotor from a blood sample (22) from a given species,
- a sample centrifuging module (12) adapted, inside the measuring chamber, to centrifuge the rotor and position it angularly at a plurality of angular positions,
- an optical module adapted to apply beams of light to the interior of the measuring chamber, in areas that may be occupied by microtanks of the rotor, in at least some of said angular positions of the rotor, this optical module including a flash-lamp type light source (14) and a reference light sensor (16),
- an electronic processing and control system (23, 24, 25) for controlling the dilution module, the optical module and the centrifuging module, to acquire measurements from the beams intercepted by said areas of the measuring chamber, to process these measurements and to deduce results therefrom, said processing system including an external memory reader (26) adapted to read a portable external memory (27) containing at least information characteristic of at least the disposable rotor in use.

2. Analyser according to claim 1, **characterised in that** the external memory contains information concerning the calibration of the rotor and the expiry date of the dry reagents contained in this rotor.

3. Analyser according to claim 1 or claim 2, **characterised in that** the external memory further contains information, updated by the electronic processing system, on the use of the rotor in use.

4. Analyser according to claim 3, **characterised in that** the external memory contains information, updated by the electronic processing system, on the numbers of tests that have been effected with the respective dry reagents.

5. Analyser according to claim 4, **characterised in that** the external memory contains information, updated by the electronic processing system, on the number of tests that can still be effected with the dry reagents.

6. Analyser according to claim 3, **characterised in that** the external memory contains information, updated by the electronic processing system, on tests effected and requested and on tests effected but not requested.

7. Analyser according to any one of claims 1 to 6, **characterised in that** the external memory contains information characteristic of a batch of disposable rotors.

8. Analyser according to any one of claims 1 to 7, **characterised in that** the external memory is a microcircuit card.

9. Analyser according to any one of claims 1 to 7, **characterised in that** the external memory is a Compact Flash type card.

10. Analyser according to any one of claims 1 to 7, **characterised in that** the external memory is a USB key.

11. Analyser according to any one of claims 1 to 10, **characterised in that** the digital diluter includes a piston actuated by a motor, this piston and this motor being mounted on the chassis, and a manipulation handle provided with a sampling and injection nozzle, which enables dilution of the sample to be analysed to a ratio defined as a function of the species of the sample to be analysed.

12. Analyser according to any one of claims 1 to 11, **characterised in that** the centrifuging module includes an eccentric stepper motor, pinions fixed to the shaft of this motor and to a drive shaft carrying the rotor in use and a belt cooperating with these pinions.

13. Analyser according to any one of claims 1 to 12, **characterised in that** the reference light sensor (16) is mounted, inside the optical module, on a beam splitter (17).

14. Analyser according to any one of claims 1 to 13, **characterised in that** the optical module includes a monochromator, such as a filter wheel (18).

15. Analyser according to any one of claims 1 to 14, **characterised in that** the electronic control system includes input means for entering the species to which the blood sample belongs, and activates the dilution means as a function of that input.

16. Analyser according to any one of claims 1 to 15, **characterised in that** the electronic control system includes input means for entering individual tests to be effected in the rotor in use.

17. Analyser according to claims 1 to 16, **characterised in that** it includes a module (19) for regulating the temperature of the measuring chamber (20) to a precise and stable temperature by means of pulsed air and a Peltier system.

## Patentansprüche

1. Kompakter Analysator für trockene Biochemie an Blutproben, welcher auf ein und demselben Gestell aufnimmt (11):
- eine Messkammer (20), welche angepasst ist, um einen verbrauchbaren Rotor (13), umfassend wenigstens eine zentrale Kammer (13') zur Aufnahme von verdünnter Probe und um diese zentrale Kammer herum eine Mehrzahl von Mikrogefäßen (13A, 13B), welche trockene Reagenzien enthalten und angepasst sind, Fluid aus dieser zentralen Kammer während einer Zentrifugation dieses Rotors zu empfangen, aufzunehmen,
- ein Modul zur numerischen Verdünnung (21) in einem abhängig von der Art der zu analysierenden Probe definierten feststehenden oder variablen Verhältnis und angepasst, um eine verdünnte Probe in einer zentralen Kammer dieses Rotors ausgehend von einer Blutprobe (22) einer gegebenen Art zu platzieren,
- ein Proben-Zentrifugationsmodul (12), welches angepasst ist, um im Inneren der Messkammer die Zentrifugation dieses Rotors und seine winklige Positionierung in einer Mehrzahl von Winkelpositionen sicherzustellen,
- ein optisches Modul, das angepasst ist, um Lichtstrahlbündel im Inneren der Messkammer in Zonen, welche durch Mikrogefäße des Rotors zumindest in bestimmten der Winkelpositionen des Rotors besetzt werden können, zum Einsatz zu bringen, wobei dieses optische Modul eine Lichtquelle (14) vom Blitzlicht-Typ und einen Referenz-Lichtsensor (16) umfasst,
- ein elektronisches Verarbeitungs- und Steuerungssystem (23, 24, 25), um das Verdünnungsmodul, das optische Modul und das Zentrifugationsmodul zu steuern, Messwerte ausgehend von Strahlenbündeln, die durch die Zonen der Messkammer aufgefangen worden sind, zu erfassen, diese Messwerte zu verarbeiten und daraus Ergebnisse abzuleiten, wobei das Verarbeitungssystem ein Lesegerät für einen externen Speicher (26) umfasst, welches angepasst ist, um einen transportablen externen Speicher (27), welcher mindestens charakteristische Informationen von zumindest dem verbrauchbaren Rotor enthält, im Verlauf einer Verwendung zu lesen.

2. Analysator nach Anspruch 1, **dadurch gekennzeichnet, dass** der externe Speicher Informationen enthält, welche die Kalibrierung des Rotors und den Verfallszeitpunkt der in diesem Rotor enthaltenen trockenen Reagenzien betreffen.

3. Analysator nach Anspruch 1 oder Anspruch 2, **dadurch gekennzeichnet, dass** der externe Speicher außerdem Informationen, die durch das elektronische Verarbeitungssystem aktualisiert werden, hinsichtlich der Verwendung des Rotors im Verlauf einer Verwendung enthält.

4. Analysator nach Anspruch 3, **dadurch gekennzeichnet, dass** der externe Speicher Informationen, die durch das elektronische Verarbeitungssystem aktualisiert werden, hinsichtlich der Anzahlen von Tests, die mit den jeweiligen trockenen Reagenzien ausgeführt werden, enthält.

5. Analysator nach Anspruch 4, **dadurch gekennzeichnet, dass** der externe Speicher Informationen, die durch das elektronische Verarbeitungssystem aktualisiert werden, hinsichtlich der Anzahlen von Tests, die mit den trockenen Reagenzien noch ausgeführt werden können, enthält.

6. Analysator nach Anspruch 3, **dadurch gekennzeichnet, dass** der externe Speicher Informationen, die durch das elektronische Verarbeitungssystem aktualisiert werden, hinsichtlich ausgeführter und angeforderter Tests wie auch hinsichtlich ausgeführter, aber nicht angeforderter Tests enthält.

7. Analysator nach einem der Ansprüche 1 bis 6, **dadurch gekennzeichnet, dass** der externe Speicher charakteristische Informationen von einem Satz von verbrauchbaren Rotoren enthält.

8. Analysator nach einem der Ansprüche 1 bis 7, **dadurch gekennzeichnet, dass** der externe Speicher eine Chipkarte ist.

9. Analysator nach einem der Ansprüche 1 bis 7, **dadurch gekennzeichnet, dass** der externe Speicher eine Karte vom "CompactFlash"-Typ ist.

10. Analysator nach einem der Ansprüche 1 bis 7, **dadurch gekennzeichnet, dass** der externe Speicher ein USB-Stift ist.

11. Analysator nach einem der Ansprüche 1 bis 10, **dadurch gekennzeichnet, dass** der numerische Verdünner einen durch einen Motor betätigten Kolben, wobei dieser Kolben und dieser Motor auf dem Gestell montiert sind, und einen Handhabungsgriff, der mit einer Entnahme- und Injektionstülle ausgestattet ist, umfasst, was eine Verdünnung der zu analysierenden Probe in einem definierten Verhältnis abhängig von der Art der zu analysierenden Probe erlaubt.

12. Analysator nach einem der Ansprüche 1 bis 11, **dadurch gekennzeichnet, dass** das Zentrifugationsmodul einen Motor, dessen Mittelpunkt schrittweise verlegt wird, Ritzel, die auf der Welle diese Motors und auf einer Antriebswelle, die den Rotor im Verlauf der Verwendung trägt, befestigt sind, und einen Riemen, welcher mit diesen Ritzeln zusammenarbeitet, umfasst.

13. Analysator nach einem der Ansprüche 1 bis 12, **dadurch gekennzeichnet, dass** der Referenz-Lichtsensor (16) innerhalb des optischen Moduls auf einem Strahlteiler (17) montiert ist.

14. Analysator nach einem der Ansprüche 1 bis 13, **dadurch gekennzeichnet, dass** das optische Modul einen Monochromator, wie eine Filterscheibe (18), umfasst.

15. Analysator nach einem der Ansprüche 1 bis 14, **dadurch gekennzeichnet, dass** das elektronische Steuerungssystem Erfassungsmittel, um die Art, zu welcher die Blutprobe gehört, zu erfassen, umfasst und die Verdünnungsmittel abhängig von dieser Erfassung aktiviert.

16. Analysator nach einem der Ansprüche 1 bis 15, **dadurch gekennzeichnet, dass** das elektronische Steuerungssystem Erfassungsmittel umfasst, um elementare Tests, die an dem Rotor im Verlauf einer Verwendung auszuführen sind, zu erfassen.

17. Analysator nach Anspruch 1 bis 16, **dadurch gekennzeichnet, dass** er ein Modul (19) zur Regulation der Temperatur der Messkammer (20) durch Gebläseluft und ein Peltier-System auf eine genaue und stabile Temperatur umfasst.
